# EUROPEAN PATENT APPLICATION

(11) **EP 1 300 083 A1**
(43) Date of publication of application: **09.04.2003**
(21) Application number: 01123268.3
(22) Date of filing: 04.10.2001
(51) Int. Cl.: A23L 1/18, A23L 1/164, A23P 1/12, A23G 3/00

(54) **Milk-based snack**

(71) Applicant: SOCIETE DES PRODUITS NESTLE S.A., 1800 Vevey (CH)
(72) Inventor: Mikota, Paul, 1091 Grandvaux (CH); Fourre, Pierre Félix, 1400 Yverdon-les-Bains (CH); Neidlinger, Sylke, 1010 Lausanne (CH); Houlmann, Agnès, 1400 Yverdon-les-Bains (CH); Meister, Niklaus, 3506 Grosshoechstetten (CH)
(74) Representative: Wavre, Claude-Alain

(57) **Abstract**

The present invention relates to an extruded milk-based snack comprising high amount of total milk solids. In particular, it was possible to introduce more than 40% by weight of total milk solids into an extruded snack. The invention also concerns coated snacks, in particular chocolate-coated snacks and a process of obtaining the snacks.

## Description

The present invention relates to an extruded milk-based snack. This invention also relates to a coated or filled snack, to a process for obtaining the snack and to the use of a casein source to increase the amount of total milk solids in a food product.

### The Background Art

The high nutritional value of milk and milk derived products has been acknowledged ever since. Milk, as a raw food, contains proteins with high amounts of essential amino acids and is rich in calcium. It is for the reason of its nutritional qualities that milk or milk derived products, for example milk powder or whey powder, are often added to luxury food products and recipes. However, in the context of extruded products, especially cooked-extruded expanded products, the addition of milk derived ingredients often influences in an undesirable manner the end product qualities. Especially high amounts of milk solids are technically difficult to add to the recipe of a snack obtained by extrusion. With a higher amount of milk solids, in particular fat, lactose and milk-proteins, the extruded product tends to be unpalatable, unexpanded, too hard and sticky. In the prior art, the highest amount of non-fat milk solids found in a cooked-extruded-expanded snack is 27.5% per total weight including water. Together with the milk fat, the total milk solids equal maximally 40% by weight.

In WO 0056174 (SOCIETE DES PRODUITS NESTLE) a cooked-extruded-expanded dietetically valuable snack product is disclosed, which has a porous texture and comprises from 5.5 to 27.5% of non-fat milk solids (40% total milk solids, including milk fat).

Therefore, a need exists for an extruded snack with a still higher amount of total milk solids. In particular a snack, which also comprises an amylaceous material, having a fine, porous, crunchy, smooth and melt-in-the-mouth texture while being dietetically valuable is desired.

It is also an object of the present invention to have a snack with higher equivalents of natural milk than any known extruded snack so far known.

Another object of the invention is to provide an extruded-expanded snack product, which may be coated with a sugar or fat based coating, ideally a coating further comprising milk solids.

Further objects of the invention are to obtain a handy, easy to consume snack, and/or to have a filled snack.

### Summary of the Invention

Remarkably, it has been possible to still increase the total amount of milk solids in an extruded-expanded snack. Surprisingly, the snack according to the invention, besides an increased nutritional value, has a good texture, taste and overall organoleptic properties.

Consequently, in a first aspect the present invention provides an extruded snack, which comprises more than 27.5% by weight non-fat milk solids.

In a second aspect the invention provides an extruded snack, which comprises more than 40% by weight of total milk solids.

In a third aspect the invention provides a coated or filled snack, which comprises
- a snack according to the invention, and,
- a coating or a filling.

In a forth aspect, the present invention concerns a method of obtaining a sweet snack, comprising the step of cooking-extruding a mixture comprising
more than 40% up to 80% total milk solids, or more than 27.5% up to 70% non-fat milk solids,
2 to 20% of a caseinate salt, a casein powder and/or another casein source, and,
carbohydrates

In a fifth aspect, the present invention provides the use of a caseinate salt, casein powder and/or another casein source to increase the amount of milk solids in an extruded food product.

An advantage of the present invention is that it provides an extruded snack with a very high content of milk solids and at the same time unexpected organoleptic properties.

Another advantage of the present invention is that it provides a snack, which is crispy, crunchy, smooth, having a porous and melt-in-the-mouth texture and at the same time a high nutritional value.

Yet another advantage of the present invention is that it provides a possibility to include more milk solids into an extruded snack without deteriorating texture, taste and the overall organoleptic properties of a snack.

Still another advantage of the present invention is that an extruded snack with high total milk solids is obtained, which is at the same time expanded after extrusion.

Since extrusion is a relatively inexpensive, easy to handle, safe and clean way of producing food, the present invention has also the advantage of producing safely and inexpensively a nutritionally valuable food product.

### Detailed Description of the Invention

Within the context of this specification the word "comprises" is taken to mean "includes, among other things". It is not intended to be construed as "consists only of".

"Snack", in the context of the present invention, refers to any kind of extruded and optionally expanded food material.

The terms "cooked" or "cooking" in the expressions "cooked-extruded (-expanded" or "cooking-extruding (-expanding)" is to be understood as meaning heated and/or cooked" or "heating and/or cooking".

The term "water content" is intended to refer to the humidity of a food product or of the ingredients of a food product at a specific, indicated stage of the process of preparing the final product. Stages are, for example, before, during, directly after or later after extrusion.

The term "casein source" is intended to include a caseinate salt, for example, sodium caseinate, casein powders, hydrolysed casein and other casein derived isolates or products.

The term "total milk solids" is intended to refer to all ingredients of a food product that originate from milk, for example, milk fat, lactose and milk proteins. As an example, the total milk solids may be constituted by milk powder, semi-skimmed milk powder or skimmed milk powder, isolated lactose, other isolated milk components and/or mixtures of different milk components contained in a snack. The present description will list further examples.

The term milk solids refers to all ingredient of milk that is not water, and the derivatives of these ingredients. The main components of milk are fat, lactose, casein and whey. Examples for derivatives are hydrolysed whey, hydrolysed casein, isolated milk fat, lactate, and so forth.

The term "non-fat milk" solids corresponds to the "term milk solids" from which the amount milk fat has been deducted. Hence, it is possible to replace the milk fat by a vegetable fat, for example, without affecting the amount of non-fat milk solids of the snack.

All percentages are given in percent by weight, if not otherwise indicated.

Preferably, in an embodiment the extruded snack comprises 2 to 20% of a caseinate salt, casein powder and/or another casein source.

Preferably, in an embodiment according to the extruded snack comprising a casein salt, the casein salt may be sodium caseinate.

Preferably, the casein salt, the casein powder and/or the other casein source is present in an amount of 2 to 10%, more preferably, 4 to 8%.

Preferably, in an embodiment, the snack according to the present invention is expanded after extrusion.

Preferably, the snack comprises more than 40% to 80% of total milk solids, for example, 41% to 80% of total milk solids, preferably 41 to 75% of total milk solids. In a preferred embodiment, it comprises 41 to 70% of total milk solids. In still another embodiment, the snack comprises 45 to 75, preferably 50 to 75% total milk solids.

In an embodiment, the snack comprises more than 27.5% to 70%, for example, 28 to 70% of non-fat milk solids, preferably, 28 to 65% of non-fat milk solids. In a preferred embodiment, it comprises 30 to 65% of non-fat milk solids. In still another embodiment, the snack comprises 30 to 60%, preferably 35 to 60% of non-fat milk solids.

Preferably, it comprises 15 to 70% of carbohydrate source. More preferably, the snack comprises 20 to 50%, even more preferably, 25 to 35% of a carbohydrate source.

Preferably, it comprises 0.5 to 10% sweet carbohydrates. More preferably, the snack comprises 1 to 5% sweet carbohydrates.

Preferably, the snack has a specific weight of 100 to 200 g/l and/or a water content of 1 to 4%. Preferably, the specific weight of the snack is 120 to 160 g/l, more preferably it is 130 to 145 g/l The water content, after drying the extruded snack, is preferably 1.5 to 3%.

Preferably, in an embodiment of the coated or filled snack, the coating is a chocolate coating.

Preferably, in an embodiment, the coated or filled snack comprises 40 to 70% of chocolate, more preferably 55 to 65%, even more preferably 60 to 65% of chocolate.

Preferably, in an embodiment of the coated snack comprising chocolate, that is, a chocolate-coated snack, 100 g of this snack correspond to the equivalent of 400 to 500 ml of semi-skimmed milk (1.9% fat content). More preferably, the 100 g of the chocolate-coated snack correspond to the equivalent of 410 to 450 ml of semi-skimmed milk.

In another embodiment, the chocolate-coated snack corresponds to the equivalent of 400 to 500 ml of full fat milk or semi-skimmed milk.

Preferably, in an embodiment of the use of a caseinate salt, casein powder, and/or another casein source, the caseinate is sodium caseinate.

Usually, the chocolate of the chocolate-coated snack also comprises milk solids. Hence, in an embodiment, the chocolate-coated snack comprises 35 to 65%, more preferably 40 to 50% of total milk solids.

In an embodiment of the present invention the process further comprises the step of drying the mixture after extruding it. Preferably, the drying is done at a temperature below 100°C until a water content of 1 to 5%, preferably 1.5 to 3%, is reached.

In an embodiment of the process, the mixture comprises the amounts of total or non-fat milk solids as indicated above with regard to the snack.

In another embodiment of the process the mixture also comprises a casein source, being part of the total milk solids or the non-fat milk solids.

With respect to the mixture of the process of the present invention, comprising a specific amount of (total or non-fat) milk solids, and a specific amount of a casein source, it is clear to the skilled person that the casein will also form part of the milk solids. For example, if the mixture comprises 30% non-fat milk solids and 6% sodium caseinate, the caseinate is also counted in the 30%. Hence, 20% of the non-fat milk solids are constituted in the form of the caseinate.

In another embodiment of the process, the carbohydrates comprise starchy material, for example, corn starch. In another embodiment, the starchy material is hydrolysed starch.

Preferably, in an embodiment of the use of caseinate salt and/or casein powder to increase the maximum amount of total milk solids in a food product, the amount is the maximum amount. In other words, the casein serves to increase the maximum amount of milk solids that can possibly be introduced into a food product while still granting acceptable organoleptic properties.

In an embodiment of the use mentioned above, the food product is a snack, preferably an extruded snack, more preferably, the snack according to the present invention.

The ingredients of the snack may be selected from an unlimited range of possible sources.

The milk solids, for example, may be chosen from different milk fractions. For example, whole milk powder, skimmed milk powder, semi-skimmed milk powder, cream powder, casein, caseinate, sweet or acid whey powders, hydrolysed whey or casein powders, or further isolated milk components like CGMP (caseino glycomacropeptide), lactalbumine, lactoglobuline or other milk proteins may be used. Also milk sugar, lactose, and butter oil may be included in the milk solids.

The carbohydrate source, for example, may be any suitable carbohydrate or carbohydrate mixtures. For example, the carbohydrate may be lactose, maltose, trehalose, maltodextrin, modified starch, amylose starch, high amylose starch, starch from any suitable origin, such as, for example, topioca starch, corn starch, cereal starch, potato starch may be used. Other carbohydrates are sucrose, galactose, glucose, fructose, mannose, ribose or mixtures thereof. Hence, any poly-, oligo-, di-, and/or monosaccharides known to be suitable for use in nutrition may be used. Hence, raffinose, stachyose, verbascose, which are oligosaccharides, as well as fructans may be optionally incorporated into the snack according to the present invention.

Preferably, the carbohydrate source comprises starchy material. The starchy material may be chosen from any nutritionally acceptable starch. For example, hydrolysed amylaceous material may be used. Amylaceous material having a DE of from about 0 to 50 may be used. However, also non-hydrolysed starchy material may be used. High amylose starch may be used, for example. The starch source may be any known starch source, for example flour of cereals, potatoes, see list above. If a starchy material is used, it may be in the form of flour, semolina or groats. Preferably, flour and semolina are used. Hence, the starch may comprise amylose, amylopectin and hydrolyzates thereof.

The carbohydrate source may also comprise fibre. For example, soluble and/or non-soluble fibre may be used. Similarly, a mix of fibres from different origin may be used. For example, cellulose, hemicelluloses such as pectins, xylans, xyloglucans, galactomannans and β-glucans, gums and mucilages may optionally be present in the snack. Also prebiotic fiber may be added to the snack. For example, inulin or its hydrolysate may be added.

The snack may also comprise one or more ingredients conferring sweetness. Usually, ordinary sugar (sucrose) is used, but also others, like for example, glucose, fructose, or other sweet monosaccharides may be used as ingredients of the milk-based snack. The sugar may be in a purified form or in form of molasses, maple sugar, raw sugar, brown sugar, honey, for example. Of course, also sweet disaccharides may be used like lactose, maltose sucrose and others. Also sugar substitutes may be used if appropriate. Examples are sugar alcohols, for example sorbitol, and/or non-caloric sweeteners, for example aspartame and saccharin. This is especially the case if the consumer is glucose intolerant and/or a diabetic patient and the final product is intended to avoid prolonged hyperglycemia upon consumption. It is mentioned just besides that the product according to the present invention is predestinated in the context of the above mentioned health problems, owing to its high capacity of replacement of carbohydrates by milk proteins, for example.

If a liquid is used, also malt solution, caramel solution or another syrup or treacle may be used.

The snack may also comprise salts, aromas and flavors. For example, the snack may comprises calcium carbonate, disodium phosphate, sodium caseinate, sodium chloride, just to mention a few. Of course, the snack may also comprise other ingredients, for example ingredients influencing the texture, the crispiness, the color and any other physical characteristic of the snack.

For the preparation of the snack, usually more or less dry or powdered ingredients are mixed and then liquid ingredients and water may be added. For example, a mixture is prepared comprising, in percent by weight of dry matter, 15 to 70% of skimmed milk powder, 10 to 40% native corn starch, 15 to 70 % full fat milk powder, 1 to 10% sodium caseinate, 0 to 10% corn flour, 0.3 to 2% of caramel sugar syrup, 0.2 to 1% disodium phosphate, 0 to 1% calcium carbonate. Before addition of the syrup, the dry components are mixed. The dry mixture may have 2 to 8%, preferably 5 to 7% water content. The syrup may have 45 to 75%, preferably 60 to 70% water content. After the addition of the syrup, the final mixture may have a water content of 5 to 20%, preferably 12 to 18%. The water content should be adjusted to obtain a correct expansion after cooking extruding the final mixture.

For example, the liquid or fluid components are added to the dry mixture in a first mixing section of an extruder.

The extruder may be any extruder suitable to carry out the invention. For example, it may be a mono- or a twin screw extruder. Hence, a traditional food extruder may be used, while a twin screw extruder is preferred, for example a :BC45 Clextral extruder may be used.

Preferably, a rather big screw length of from about 800 to about 1200 mm is chosen in order to provide an adequate residence time of from about 5 to 50 s, for example.

Preferably, from three or four to about six or seven barrel heating zones are provided for.

In a first zone, the screw configuration may be such (relatively large screw pitch) that the components of the mixture are simply mixed together and transported into the next zone.

In further zones, namely in from a second to possibly a sixth zone, the screw configuration may be such (relatively short screw pitch) that the mixture is simultaneously transported and kneaded. The barrel heating may be set within a temperature range of from about 40 to 70°C for a second zone, it may be set within a range of from about 50°C to 80°C for a third zone and within a range of from about 60°C to 95°C, for a fourth to possibly a sixth zone, for example.

In a last zone, the screw configuration may be such (relatively short screw pitch) that the cooked and kneaded mixture is further kneaded and compressed in order to be pushed through the openings of a die provided for after the end of the screw or twin screw, and the barrel heating may be set within a temperature range of from about 70°C to 90°C, for example.

As a general rule, the temperature during extrusion may not be too long or much above 100°C in order to avoid a Maillard reaction negatively impacting the final product taste , constitution and nutritional properties.

The die may have one or more circular openings having of from 2 to 10 mm in diameter, for example. The die openings may also have different, fancy shapes such as stars, for example.

In a preferred embodiment of the present process, compressed nitrogen is injected into the plastified mass just before extruding it. The plastified mass, in this context, refers to the ingredients that are processed as a mixture in the extruder and experience a change of physical parameters, development of flavours and so on. Nitrogen injection may be carried out under a pressure of from about 20 to 100 bar, at a rate of from 0.1 to 0.6 g nitrogen per kg of mass, for example.

Most surprisingly, the cooked-extruded thermoplastic mass does not expand to a greater degree under the effect of nitrogen injection but on the contrary to a lesser degree. This is because the injected nitrogen not only increases the number of bubbles within the expanded rope of cooked-extruded thermoplastic mass but also cools down the mass before it is extruded. A fine porous texture may be obtained in this way.

For carrying out this preferred embodiment, the screw configuration in the last zone may also comprise mixing discs, bilobes or blocks of bilobes, for example.

In a preferred embodiment of the present invention, the snack has the form of round-shaped particles, pellets or balls. The balls may have a diameter of 0.5 to 4 cm, preferably, 1 to 2.5 cm, for example, 1.4 to 1.7 cm. To this end, a cutting takes place immediately at the extruder outlet. Hence, the mass that is obtained by the extrusion process in the extruder is cut just at the moment when it 'extrudes' from the extruder. The step of cutting into pieces the thus obtained rope of expanded thermoplastic mass may be carried out by a two or more blade cutter rotating adjacent to the die openings, for example.

In general, the skilled person of food extrusion is easily able to select the extrusion die, a cutting device, if any, a collection system, if any, in order to obtain an end-product of any desired shape and size.

Immediately after extrusion, the water content of the product (referred to as 'mass obtained by the extrusion process' or 'the thermoplastic mass' above) may be in the range of 4 to 18%, preferably 7 to 14%, more preferably 8 to 11%.

Optionally, the extrusion step may take place under vacuum. This is adequate, if a less dense or more expanded product is desired. On the other hand, the plastic mass may be pushed through the die into a free open space at atmospheric pressure. Also the temperature of the space into which the mass is extruded may be adjusted to obtain specific characteristics in the end product. In the context of the present invention, these adjustments are optional and it is well possible to extrude the thermoplastic mass into an open space at atmospheric pressure and room temperature.

Preferably, a drying step is included after extrusion and optional cutting. For example, the drying temperature is below 100°C, in order to minimize or prevent undesired modifications of or reactions in the end product. For example, a strong Maillard reaction may be avoided. Severaly driers are suitable to carry out this step, as, for example, fluid-bed driers, for example those manufactured by Comessa, Babcock, Drais, Vibra, Proctor & Schwartz, or, band driers, commercially available from APV, Comessa, Proctor & Schwartz, Babcock, or rotary driers, to be obtained by Babcock, Allgaier, Comessa, Wenger and others, for example. Of course, the above mentioned list of possible driers is just a possible selection.

The optional step of drying the extruded snack, preferably down to a residual water content of from 1 to 4% by weight, may be carried out on a belt drier with hot air, for example.

After drying, the water content of the snack may be in the range of 0.5 to 7%, preferably 1 to 4%, more preferably 1.5 to 3%.

In principle, the extruded and dried snack is already a tasty, crunchy milk-based snack with a porous and melt-in-the-mouth texture.

If desired, however, the snack may be further processed to obtain for example a filled or coated snack.

In order to optionally coat the present snack product with a sugar based coating, a slurry may be sprayed onto the snack product, for example. The slurry may comprise from 30 to 60% of sugar, up to 32% of whole milk powder, up to 60% of fruit pulp or concentrate, up to 10% of cocoa powder and added water up to a water content of from 20 to 30%, for example.

In the slurry, the sugar may be sucrose, fructose, dextrose and/or raw cane sugar, for example.

The possible step of coating the snack product by spraying thereon a slurry having the composition disclosed above may be carried out in a cylindrical tumbler rotating around its generally horizontal axis and being provided inside with spraying nozzles. Preferably located in an upper part of the cylindrical internal space defined by the tumbler wall, such nozzles may spray the slurry downwards onto the tumbled snack product, for example.

Then, the just coated snack product may be dried again to a residual water content of from 1.0 to 3% by weight on a belt drier with hot air, for example.

The snack may also be coated or enrobed with a chocolate coating. In this case, the snack as obtained after the extruding step and the optional cutting and drying step, may be cooled and coated with chocolate by panning, for example. The panning operation consists of the application of successive chocolate layers after having cooled the preceding layer. In particular, melted chocolate may slowly be poured on the product in movement in a rotating panning equipment. Cool air (temperature of 10-22°C) may be blown on the surface of the product in movement. The chocolate fat crystallizes, hardens, and the operation may be repeated, so that different chocolate layers can be formed. Panning equipment is supplied by Dumoulin, Driam, Nicomac for example. This kind of coating may be selected, for example, when extruded balls are to be coated.

The possible filling of a snack product having a hollow shape of tube or cup may be carried out by co-extrusion, for example.

The snack product thus obtained, possibly coated or filled, may be conditioned in a packing providing for its protection against humidity, such as a packing made of a film with aluminium foil, for example.

Also probiotics may be added to the coating or the filling. For example, probiotics may be directly sprayed onto the snack.

Without wishing to be bound by theory it is postulated that it is probably the presence of the sodium caseinate or the other casein source that enables the high total milk solid content in the present invention. As mentioned above, it was so far only possible to introduce up to 27.5% of non-fat milk solids into an extruded snack.

The following examples are given by way of illustration only and in no way should be construed as limiting the subject matter of the present application.

### Example 1: Preparation of an extruded milk-based snack

An extruded snack comprising, in dry matter, 65% by weight total milk solids is prepared according to the steps indicated below.

The powdered ingredients given in table 1 below are mixed to obtain a dry mixture.

**Table 1:**

| Dry mixture ingredients in kg for preparation of an extruded snack. | | |
|---|---|---|
| Ingredients | Batch Quantity (kg) | Water content (% by weight) of ingredients |
| Corn flour | 4.3 | 11.8 |
| Calcium carbonate | 0.3 | 2.0 |
| Sodium caseinate | 4.7 | 6.4 |
| Corn starch | 27.7 | 12.5 |
| Disodiumphosphate | 0.5 | 2.0 |
| Skimmed milk powder | 35.1 | 3.7 |
| Caster sugar | 2.0 | 0.1 |
| Full fat milk powder | 25.4 | 3.0 |
| **Total mixture:** | **100** | 6.4 |

Separately, a caramel sugar syrup is prepared by dissolving one part caramelised sugar in one part water. This syrup has a water content of 66%.

The dry mixture and the syrup are mixed together in a first zone of a BC-45 type CLEXTRAL twin screw extruder. Upon addition of 1.5kg syrup, and, in addition, 6.9 1 water, the mixture (108.4 kg in total) has a total water content of about 15% inside the extruder.

In the first zone, the screw pitch was 66 mm in length, the components of the mixture were simply mixed together and transported to the next zone.

In a second zone, the screw pitch was of 50 mm and comprised mixing elements, the barrel heating was set to a temperature of from 40 to 70°C and the mixture was simultaneously heated up, transported and kneaded.

In a third zone, the screw pitch was of 25 mm, the barrel heating was set to a temperature of from 50 to 80°C, and the mixture was simultaneously further heated up, transported and kneaded.

In a fourth zone, the plastified mass or mixture was heated and/or cooked while being simultaneously transported and kneaded under a pressure of about 70 bar, the barrel heatings being set to a temperature of from 60 to 90°C.

In the fourth zone comprising mixing elements, the screw pitch was of 25 mm. The average residence time in the extruder was of approximately 30 seconds.

At the end of the fourth zone the hot plastic mass is compressed to about 70 bar and pushed through the die into a free open space at atmospheric pressure and ambient temperature, where the extruded still thermoplastic mass expanded to an expansion degree of about 2.

At the moment of extrusion-expansion, the heated thermoplastic mass evaporates water and thereby loses about 4-7 % of its water content, which results in a water content of 8 to 11 % in the extruded-expanded product.

At the moment of extrusion, the extruding, still thermoplastic mass is cut with a four-blade rotating knife in a way that the expanding mass results in round-shaped snacks (balls) of a diameter of 1.5 cm.

After cutting, the extruded pieces (balls) are subjected to a drying step. They are dried in a "Sechage Comessa"-fluid-bed drier at a temperature of 80 - 100°C for about 15 minutes.

The snack as obtained after the drying step has a density of 135-140 g/l. It has a crunchy, crispy texture, a pleasant mouthfeel and a good taste. It comprises 65% of total milk solids. Since full fat milk powder was used in the dry mix, the snack comprises 6.5% milk fat. Its nutritional characterisation is given in table 2 below. Table 2: Composition of the extruded milk-based snack (values are rounded)

**Table 2:**

| Composition of the extruded milk-based snack | | | |
|---|---|---|---|
| Composition | g/100g | kcal/100g | kcal % |
| Water content | 3 | | |
| Carbohydrates | 60.6 | 242 | 60.3 |
| Proteins | 23.7 | 95 | 23.6 |
| Fats | 7.2 | 65 | 16.1 |
| Total fibre | 0.2 | | |
| Ash | 5.4 | | |
| Total | 100 | 402 | 100 |

### Example 2: Preparation of a chocolate-coated, milk-based snack

A chocolate-coated milk-based snack is prepared starting from the cooked-extruded-expanded balls of example 1. Instead of drying in a Comessa fluid-bed drier, in this case the drying is performed in an "Escher-Wyss" fluidised bed drying apparatus, until the snack has a moisture content of about 2%.

A white chocolate (water content: 0.8 %) is coated onto the snack with using a Dumoulin panning equipment. The chocolate-coated snack consists of 63% of chocolate coating and 37% of the snack, which forms the inner core.

Finally, the chocolate-coated snack is cooled. The round-shaped snack comprises 43% total milk solids and it has a diameter of approximately 14-17 mm. Its nutritional composition is given in table 3 below.

**Table 3:**

| Nutritional Composition of chocolate-coated milk-based snack. | | | |
|---|---|---|---|
| Composition | g/100g | kcal/100g | kcal % |
| Water content | 1.3 | | |
| Carbohydrates | 59.7 | 239 | 48 |
| Protein | 12.4 | 50 | 10 |
| Fat | 23.7 | 213 | 42 |
| Total fibre | 0.1 | | |
| Ash | 2.8 | | |
| Total | 100 | 502 | 100 |

The chocolate-coated snack is crunchy, is very tasty and has a delicious porous and melt-in-the mouth texture. In addition, it is simple and safe to produce this nutritionally valuable snack.

It should be understood that various changes and modifications to the presently preferred embodiments described herein will be apparent to those skilled in the art. Such changes and modifications can be made without departing from the spirit and scope of the present invention and without diminishing its attendant advantages. It is therefore intended that such changes and modifications be covered by the appended claims.

## Claims

1. An extruded snack, which comprises more than 27.5% by weight of non-fat milk solids.

2. An extruded snack, which comprises more than 40% by weight of total milk solids.

3. The extruded snack according to claim 1 or 2, which comprises 2 to 20% of a caseinate salt, casein powder and/or another casein source.

4. The snack according to claim 3, wherein the caseinate salt is sodium caseinate.

5. The snack of any of claims 1 to 4, which is expanded after extrusion.

6. The snack of any preceding claim, which comprises 28% to 70% of non-fat milk solids or more than 40 to 80% of total milk solids.

7. The snack of any preceding claim, which further comprises 15 to 70% of a carbohydrate source.

8. The snack of any preceding claim, which further comprises 0.5 to 10% sweet carbohydrates.

9. The snack of any preceding claim, which has a specific weight of 100 - 200 g/l and/or a water content of 1- 4%.

10. A coated or filled snack, which comprises
- a snack according to claims 1 to 9, and,
- a coating or a filling.

11. The coated snack of claim 9, wherein the coating is a chocolate coating.

12. The coated or filled snack of claim 9 or 10, which comprises 40 to 70% by weight of chocolate.

13. A method of obtaining a sweet snack, comprising the step of cooking-extruding a mixture comprising
more than 40% up to 80% total milk solids, or more than 27.5% up to 70% non-fat milk solids, and
2 to 20% of a caseinate salt, a casein powder and/or another casein source, and,
carbohydrates.

14. The use of a caseinate salt, casein powder and/or another casein source to increase the amount of milk solids in an extruded food product.
